Europäisches Patentamt

European Patent Office

Office européen des brevets

(11) Numéro de publication : **0 021 871**
**B1**

(12) FASCICULE DE BREVET EUROPÉEN

(45) Date de publication du fascicule du brevet :
16.02.83

(51) Int. Cl.³ : **G 02 B  7/26**, G 02 B  5/16

(21) Numéro de dépôt : **80400673.2**

(22) Date de dépôt : **14.05.80**

(54) **Procédé de montage d'une fibre optique dans un embout et embout obtenu par la mise en oeuvre du procédé.**

(30) Priorité : 08.06.79 FR 7914719

(43) Date de publication de la demande :
07.01.81 Bulletin 81/01

(45) Mention de la délivrance du brevet :
16.02.83 Bulletin 83/07

(84) Etats contractants désignés :
DE GB NL

(56) Documents cités :
FR A 2 270 605
FR A 2 363 121
FR A 2 394 101

(73) Titulaire : **THOMSON-CSF**
**173, Boulevard Haussmann**
**F-75379 Paris Cedex 08 (FR)**

(72) Inventeur : **Simon, Jacques**
**"THOMSON-CSF" SCPI - 173, Bld  Haussmann**
**F-75360 Paris Cedex 08 (FR)**
Inventeur : **Bouvet, Jean-Victor**
**"THOMSON-CSF" SCPI 173, Bld  Haussmann**
**F-75360 Paris Cedex 08 (FR)**
Inventeur : **Henry, Raymond**
**"THOMSON-CSF" SCPI 173, Bld  Haussmann**
**F-75360 Paris Cedex 08 (FR)**

(74) Mandataire : **Giraud, Pierre et al**
**THOMSON-CSF SCPI 173, Bld  Haussmann**
**F-75379 Paris Cedex 08 (FR)**

Procédé de montage d'une fibre optique dans un embout et embout obtenu par la mise en œuvre du procédé

L'invention concerne un procédé de montage d'une fibre optique dans un embout et un embout obtenu par la mise en œuvre du procédé.

Les fibres optiques utilisées pour les télécommunications à grande distance (plusieurs dizaines de kilomètres) et à grand débit d'information (plus de 500 mégabits/s pour un kilomètre) sont des fibres dont le cœur est inférieur à 0,070 millimètre (70 microns).

La tendance à utiliser des fibres optiques de très petit diamètre est justifiée par la théorie de la transmission de l'onde lumineuse dans la fibre. En outre la diminution de diamètre présente un intérêt économique, car plus petit est le diamètre de la fibre, plus grande est la longueur totale de fibre que l'on peut tirer d'une préforme de dimensions usuelles. On sait que la longueur de fibre tirée d'une préforme donnée est inversement proportionnelle au carré du diamètre de cette fibre. Il est intéressant d'obtenir des longueurs aussi grandes que possible de fibre optique afin de limiter le nombre de raccordements par épissurage (collage ou soudure) ou par connecteur démontable.

Dans le domaine des télécommunications, les pertes admissibles sur une longueur de fibre homogène, ne contenant aucun raccordement, est inférieur à 10 et parfois à 0,5 décibel par kilomètre. La perte d'insertion, introduite par un raccordement, ne devrait dépasser que très légèrement l'ordre de grandeur des pertes théoriques, soit 0,2 dB. Un tel résultat suppose que l'on a réussi à aligner de façon presque parfaite les cœurs des fibres à raccorder, après polissage ou clivage des faces à abouter et rapprochement mutuel, en ne laissant subsister qu'une couche d'air d'épaisseur négligeable.

La réalisation pratique d'un raccordement satisfaisant à ces conditions nécessite la confection d'un support mécanique entourant et immobilisant l'extrémité de la fibre optique.

Le support mécanique ou embout de chaque fibre matérialise une surface de référence, qui est par exemple la surface latérale, ou des portions déterminées de celle-ci sur la périphérie d'un corps cylindrique ou tronconique. Cette surface de référence définit la position de la fibre optique, laquelle doit être par exemple placée avec précision suivant l'axe du cylindre ou du tronc de cône. En pratique, le cœur de la fibre a un diamètre de l'ordre du dixième de millimètre (100 μ) tandis que le diamètre du corps de l'embout sur la face d'aboutement est plusieurs dizaines de fois plus grand. Le positionnement de la fibre optique dans le corps de l'embout nécessite la mise en œuvre de moyens complexes du domaine de la mécanique de précision. La nature même de la fibre, notamment sa fragilité, qui entraîne la présence de moyens de protection plus ou moins souples, est un élément de complexité supplémentaire du problème ainsi posé.

L'invention vise à résoudre ce problème en fournissant en outre un procédé technologiquement simple et précis pour monter un embout satisfaisant aux conditions énoncées ci-avant.

Le procédé selon l'invention est du type dans lequel une fibre optique est montée dans un embout constituant un support mécanique matérialisant une surface de référence externe et comprenant une cavité destinée à immobiliser une extrémité de la fibre optique au niveau de la face d'aboutement de la fibre. Il est caractérisé en ce qu'il comporte au moins les étapes suivantes :

a) Usinage d'un support mécanique comportant une ou plusieurs surfaces de références externes, une face d'aboutement et une cavité dont les côtes sont fixées avec une tolérance plus large que la tolérance fixée pour la position du cœur de la fibre optique ;

b) Dépôt d'une métallisation tronconique entourant l'extrémité de la fibre optique, cette métallisation présentant une épaisseur qui demeure constante dans une section orthogonale de la fibre, et qui décroît progressivement dans un sens prédéterminé l'épaisseur maximale de la métallisation étant telle que la fibre soit arrêtée sans pouvoir dégager le support lorsqu'on la fait coulisser dans la cavité du support mécanique ;

c) Blocage de la fibre optique munie de sa métallisation dans la cavité du support mécanique ;

d) Sciage ou rodage de la fibre revêtue de sa métallisation dans le plan de la face d'aboutement.

L'invention sera mieux comprise, et d'autres caractéristiques apparaîtront au moyen de la description qui suit, et des dessins qui l'accompagnent, parmi lesquels :

la figure 1 est une coupe schématique d'une portion d'embout en cours de montage, à un stade donné de l'invention ;

les figures 2, 3 et 7 représentent des variantes de l'invention ;

les figures 4, 5 et 8 représentent des systèmes de connexion de fibres munies d'embouts selon l'invention ;

la figure 6 illustre une étape de dépôt électrolytique de métallisation au cours du procédé selon l'invention.

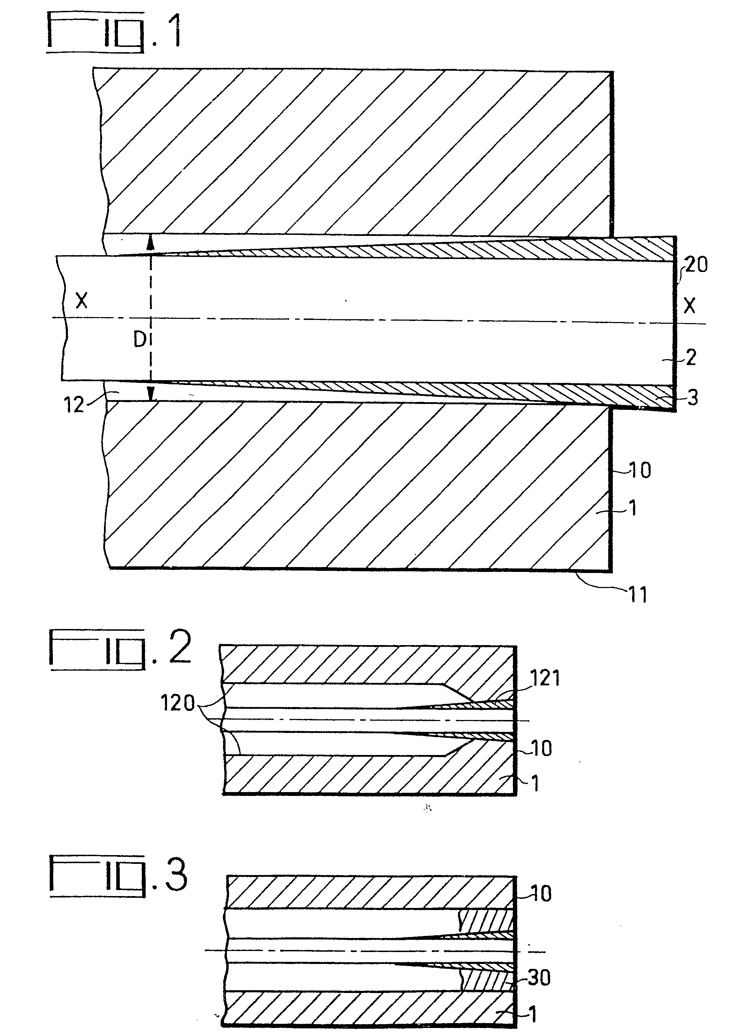

Sur la figure 1, on a représenté en coupe, un support mécanique 1, cylindrique et comportant une cavité centrale 12 qui n'est autre qu'un trou cylindrique de diamètre D. Le support est traversé par une fibre optique 2 revêtue d'une métallisation 3 de forme tronconique dont le gros bout est interrompu, au niveau d'une face terminale brute de la fibre optique. Celle-ci a été enfilée dans le trou 12, préalablement au dépôt de la métallisation 3, car la fibre optique peut être de grande longueur et stockée par exemple sur une bobine.

Au cours de l'étape (a) d'usinage, le support 1 est réalisé à partir d'une ébauche cylindrique pleine en cuivre ou en acier par exemple. L'ébauche est usinée au tour ou à la rectifieuse pour lui donner une forme cylindrique avec une tolérance sur le diamètre inférieure au centième de millimètre. On fore ensuite un trou cylindrique dont l'axe se confond avec l'axe XX du support avec une tolérance de quelques centièmes de millimètres sur le diamètre mais parfaitement centré et on dresse la face d'aboutement 10 du support 1. On sait réaliser de telles performances avec des tours miniaturisés. En ce qui concerne le diamètre D du trou central, on fixe seulement sa limite inférieure (le diamètre de la fibre optique après élimination de sa gaine de protection), la limite supérieure pouvant atteindre une tolérance de l'ordre du 1/100 de millimètre.

L'étape (b) de dépôt de la métallisation est conduite par exemple en deux sous-étapes :

Dans une première sous-étape, on introduit la (ou les) fibre(s) 2 dans un appareil de pulvérisation cathodique (ou tout autre système de métallisation en couche mince). On obtient en quelques minutes ou dizaines de minutes un dépôt métallique d'une adhérence et régularité suffisantes pour mettre en œuvre la sous-étape suivante.

On peut aussi déposer une couche mince d'or ou d'un autre métal par un procédé électrolytique du type sans électrode (connu sous le nom d'électroless) ou encore par évaporation sous vide, et enfin par voie chimique.

Le document FR-A-2 394 101 montre une manière d'appliquer un revêtement métallique à une fibre optique.

Dans une deuxième sous-étape, représentée figure 6, on immerge l'extrémité métallisée 2 de la (ou des) fibre(s) optique(s) dans un bain d'électrolyse 100 contenu dans une cuve cylindrique 103 dont elle constitue une électrode, l'autre électrode étant constituée par un (ou des) cylindre(s) métallique(s) 102.

On utilise des sels d'or, de nickel, d'étain ou d'un autre métal possédant un sel électrolysable, pour constituer le bain 100. Le branchement électrique de la fibre 2 s'effectue au moyen d'une connexion souple 101 entourant la partie métallisée.

Pendant l'électrolyse, on déplace la fibre dans le sens de la flèche 110 par un mouvement régulier de bas en haut à vitesse très lente, sans retour vers le bas. On peut ainsi simplement faire s'écouler le bain. On obtient ainsi un dépôt métallique 3 de forme tronconique. Grâce à la forme circulaire de l'électrode 102, et à la position centrale de la fibre dans le bain 100, le dépôt métallique est d'épaisseur constante au niveau d'une section droite donnée. En d'autres termes, on peut dire que la métallisation est auto-centrée. L'inclinaison sur l'axe de la génératrice du tronc de cône correspond à un angle d'ouverture de cône situé environ 3° et 45°.

Pour obtenir une métallisation tronconique en cône inversé, c'est-à-dire d'épaisseur minimale à l'extrémité il suffit d'introduire la fibre dans une gaine protégeant la partie immergée dans le bain 100 sauf l'extrémité à métalliser, puis on fait progresser l'extrémité de la fibre de bas en haut en émergeant progressivement de l'électrolyte. La gaine est ensuite retirée.

On peut recouvrir la métallisation 3 d'une mince couche de métal protecteur, capable, notamment, de jouer le rôle de couche d'arrêt lors de la soudure sur l'embout qui sera décrite ci-après.

Au cours du montage proprement dit du tronc de cône sur l'embout, c'est-à-dire au cours de l'étape (c), on tend la fibre de manière à bloquer la métallisation tronconique à l'orifice d'entrée de la face 10 d'aboutement. On immobilise la fibre en position tendue en effectuant un apport de résine, colle ou soudure (apport non visible figure 1) sur une partie au moins de la fibre à l'intérieur de la cavité 12.

Au cours d'une étape (d) d'arasage, on sectionne, par sciage et/ou rodage la partie de l'extrémité métallisée qui émerge de la face 10.

Dans une étape complémentaire, on peut souder la métallisation 3 au support 1 par soudure à haute température.

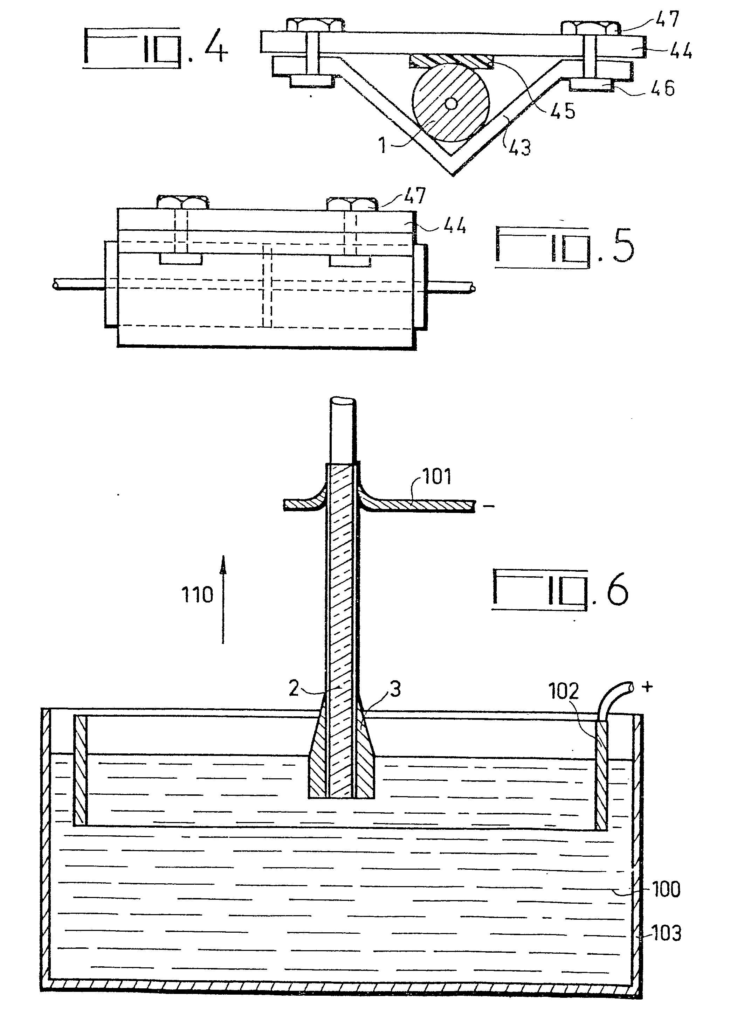

Dans la variante représentée figure 2, le support mécanique comporte une cavité 120 de diamètre beaucoup plus grand que le diamètre D de la cavité 12, sauf au voisinage de la face d'aboutement 10. En effet, dans la partie correspondante de l'embout la paroi interne 121 de la perforation centrale à la forme d'un tronc de cône dont l'angle d'ouverture est inférieur ou égal à l'angle d'ouverture du tronc de cône 3. Cette variante diminue les risques de détérioration du métal de l'extrémité de la fibre lors du blocage de la métallisation dans l'embout, par suite de bavures métalliques du trou 12 au niveau de la face 10, comme cela risque de se produire dans la réalisation représentée figure 1.

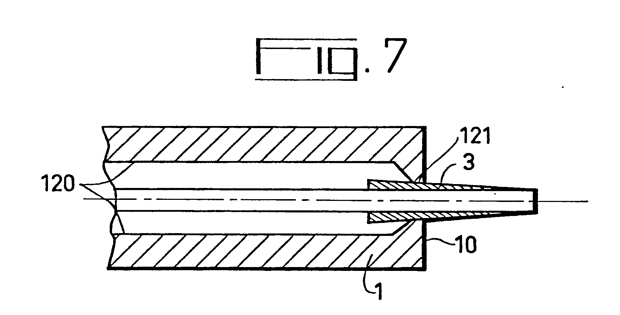

Dans une deuxième variante, figure 3, le support 1 est un manchon cylindrique en matériau dur, par exemple en acier trempé, céramique ou verre, usinable par rectification. A l'extrémité située du côté de la face d'aboutement, on a rapporté un bloc 30 de matériau facile à usiner constitué par exemple par de la résine ou par un alliage d'étain. On usine ensuite ce bloc pour obtenir un trou tronconique comme dans la variante décrite ci-avant.

Dans une troisième variante, figure 7, la métallisation 3 présente une forme tronconique disposée en sens inverse. On retrouve la cavité 120 de grand diamètre dans le support 1 tel qu'il est représenté figure 2, mais cette cavité se prolonge beaucoup plus près de la face d'aboutement 10 que dans le cas de la figure 2, de manière à laisser un tunnel 121 de faible longueur sensiblement cylindrique.

On a représenté l'embout à l'étape (c) du montage. Ces dispositions facilitent l'usinage de l'embout sans nuire à son efficacité.

Sur les figures 4 et 5, on a représenté en coupe et en élévation, un dispositif de connexion réunissant deux embouts selon l'invention. Le dispositif comporte, outre les embouts :
— une partie 43 en forme de V ;
— une bride de serrage 44 portant un tampon

3

45 en matériau élastique ;

— des moyens de liaison tels que vis 46 et écrou 47.

Le procédé selon l'invention permet de monter un embout de l'extrémité d'une fibre dans tous les cas où l'on dispose d'une longueur suffisante de fibre dont on peut éliminer la gaine de protection, notamment dans les cas suivants :

— monofibre courte, notamment pour raccorder un composant opto-électronique ;

— monofibre stockée sur bobine ;

— fibre d'un câble multiple stocké sur bobine.

Toutefois, lorsqu'un câble est installé sur le terrain, les différentes étapes du procédé ne peuvent être accomplies aisément que sur une courte longueur de fibre, en atelier doté des équipements nécessaires.

Après montage de l'embout sur une petite longueur de fibre, préalablement dénudée, on procède à la confection d'une épissure de raccordement avec une fibre de grande longueur, dont on a dénudé l'extrémité.

On sait actuellement réaliser des épissures sur fibres optiques même dans un chantier de pose sur le terrain.

Parmi les avantages non encore mentionnés de l'invention, on signalera :

— le fait que le cône de métallisation est réalisé sans aucune détérioration des caractéristiques géométriques et optiques de la fibre ;

— la facilité d'utilisation de l'embout comme système de raccordement ;

— la possibilité de rendre hermétique l'interface entre embout et fibre, grâce à la soudure de ces derniers.

## Revendications

1. Procédé de montage d'une fibre optique (2) dans un embout (1) constituant un support mécanique de révolution autour d'un axe ledit embout comportant au moins une surface de référence externe et une face d'aboutement et étant percé d'une cavité de révolution autour dudit axe destinée à immobiliser une fibre optique suivant ledit axe, l'extrémité de ladite fibre étant immobilisée au niveau de la face d'aboutement du support, procédé dans lequel les étapes suivantes sont exécutées :

a) usinage des surfaces de référence externes (11), de la face d'aboutement (10) et de la cavité (12) dudit support, les cotes pour l'usinage de ladite cavité étant fixées avec une tolérance plus large que la tolérance fixée pour le positionnement du cœur de la fibre optique ;

b) dépôt d'une métallisation tronconique (3) entourant l'extrémité de la fibre optique (2), cette métallisation présentant une épaisseur qui demeure constante dans une section orthogonale de la fibre, et qui décroît progressivement sur la longueur de la fibre, l'épaisseur maximale de la métallisation étant supérieure au diamètre de la cavité au niveau de la face d'aboutement (10) ;

c) bloquage de la fibre optique munie de sa métallisation dans la cavité du support mécanique ;

d) sciage ou rodage et polissage de la fibre revêtue de sa métallisation dans le plan de la face d'aboutement.

2. Procédé suivant la revendication 1, caractérisé en ce que l'étape (b) se divise en deux sous-étapes, comportant, dans une première sous-étape, le dépôt d'une couche métallique homogène très mince sur l'extrémité de la fibre optique et, dans une deuxième sous-étape, le dépôt par voie électrolytique, de la métallisation en forme de tronc de cône.

3. Procédé suivant la revendication 1, caractérisé en ce que la valeur de l'angle d'inclinaison sur l'axe de la fibre de la génératrice du tronc de cône est située entre 3° et 45°.

4. Procédé suivant la revendication 1, caractérisé en ce qu'il comporte une étape complémentaire où l'on soude la métallisation à l'embout.

5. Procédé suivant la revendication 1, caractérisé en ce qu'au cours de l'étape (a) on usine une perforation cylindrique ou tronconique dont la section droite de plus grand diamètre est située dans la face d'aboutement.

6. Procédé suivant la revendication 1, caractérisé en ce que le support mécanique est constitué par un manchon auquel on rapporte un bloc de matériau de nature distincte de celui du support et en ce qu'au cours de l'étape (a), ce bloc est usiné pour former la partie de la cavité se terminant à la face d'aboutement du support.

7. Embout obtenu par la mise en œuvre du procédé suivant la revendication 1, caractérisé en ce qu'il comporte un support mécanique de révolution autour d'un axe suivant lequel est immobilisée une fibre optique revêtue d'une métallisation tronconique, la surface latérale du support constituant une surface de référence de la position de la fibre, et la face plane contenant une section droite de la métallisation qui constitue une face d'aboutement pour l'embout.

8. Embout suivant la revendication 7, caractérisé en ce que le support mécanique comporte un manchon cylindrique et un bloc de matériau rapporté, au centre du manchon, et contenant la fibre dans une perforation axiale de ce bloc.

## Claims

1. A process for installing an optical fibre (2) in a connecting piece (1), constituting a mechanical support having the shape of a body of revolution about an axis, said connecting piece comprising at least one external reference surface and an abutting surface, and being further provided with a recess having the shape of a body of revolution about said axis, said recess being adapted to retain an optical fibre in accordance with said axis, the end of said fibre being retained at the level of the abutting surface of said support, said process comprising the steps of :

a) machining the external reference surfaces (11), the abutting surface 10 and the recess (12) of said support, the sizes for machining said recess being defined with a tolerance larger than that chosen for the positioning of the core of said optical fibre ;

b) depositing a metallization layer (3) of frustoconical shape which surrounds the end of said optical fibre (2), said metallization layer having a thickness which is constant in a section orthogonal with respect to the fibre, and which decreases gradually over the length of the fibre, the maximum thickness of the metallization layer being greater than the diameter of said recess at the level of said abutting surface (10) ;

c) blocking said optical fibre provided with its metallization layer in the recess of said mechanical support ;

d) sawing or lapping and polishing the fibre covered with its metallization layer in the plane of said abutting surface.

2. A process according to claim 1, characterized in that said step b) is sub-divided into two steps, comprising, in the first sub-step, depositing of a very thin homogen metallic layer on the end of the optical fibre and, in the second substep, electrolytically depositing the metallization layer with a frustoconical shape.

3. A process according to claim 1, characterized in that the value of the angle of inclination of the generatrix of the frustoconical body with respect to the axis of said fibre is comprised between 3° and 45°.

4. A process according to claim 1, characterized in that it comprises a supplementary step consisting in welding the metallization layer to the connecting piece.

5. A process according to claim 1, characterized in that during step a) a cylindrical or frustoconical bore is machined, with the section thereof which has the largest diameter being located in the plane of said abutting surface.

6. A process according to claim 1, characterized in that the mechanical support is constituted by a tubular piece to which is connected a block of a material different to that of said support, and in that during step a) said block is machined so as to form that part of said recess which terminates at said abutting surface of the support.

7. A connecting piece obtained by carrying out the process according to claim 1, characterized in that it comprises a mechanical support having the shape of a body of revolution about an axis along which is fixed an optical fibre covered with a frustoconical metallization layer, the lateral surface of said support constituting a reference surface for the positioning of said fibre, and the planar surface containing a cross-section of said metallization layer which constitutes an abutting surface for said connecting piece.

8. A connecting piece according to claim 7, characterized in that said mechanical support comprises a cylindrical tubular piece and a block of material located at the centre of said tubular piece and containing said fibre in an axial bore provided in said block.

**Ansprüche**

1. Verfahren zum Montieren eines Lichtleiters (2) in einem Verbindungsstück (1), das einen mechanischen, in bezug auf eine Achse drehkörperförmigen Halter bildet, wobei dieses Verbindungsstück wenigstens eine äussere Bezugsfläche, sowie eine Fügungsfläche aufweist und eine in bezug auf die genannte Achse drehkörperförmige Ausnehmung besitzt, um den Lichtleiter gemäss der Achse zu halten, und wobei das Ende des Lichtleiters im Bereich der Fügungsfläche des Halters festgelegt ist, umfassend folgende Verfahrensschritte :

a) Bearbeitung der äusseren Bezugsflächen (11), der Fügungsfläche (10) und der Ausnehmung (12) des Halters, wobei die Bearbeitungsabmessungen dieser Ausnehmung mit einer Toleranz gewält sind, die grösser ist, als die für die Lage des Lichtleiterkerns bestimmte Toleranz ;

b) Anbringung einer kegelförmigen Metallisierungsschicht (3), die das Ende des Lichtleiters (2) umgibt und eine Stärke bezizt, die in einem orthogonalen Schnitt des Lichtleiters konstant ist, während sie in der Längsrichtung des Lichtleiters fortschreitend abnimmt, wobei die maximale Stärke der Metallisierungsschicht grösser ist, als der Durchmesser der Ausnehmung im Bereich der Fügungsfläche (10) ;

c) Blockieren des Lichtleiters mit seiner Metallisierungsschicht in der Ausnehmung des Halters ;

d) Sägen oder Einschleifen und Polieren des Lichtleiters mit ihrer Metallisierungsschicht in der Ebene der Fügungsfläche.

2. Verfahren nach Anspruch 1, dadurch gekennzeichnet, dass der Verfahrensschritt (b) in zwei Phasen unterteilt wird, wobei die erste Phase das Erzeugen einer sehr dünnen homogenen Metallschicht auf das Ende des Lichtleiters und die zweite Phase den elektrolytischen Niederschlag der Metallisierungsschicht in Form eines Kegelstumpfs umfasst.

3. Verfahren nach Anspruch 1, dadurch gekennzeichnet, dass der Neigungswinkel der Mantellinie des Kegels in bezug auf die Achse des Lichtleiters zwischen 3° und 45° liegt.

4. Verfahren nach Anspruch 1, dadurch gekennzeichnet, dass es eine weitere Phase umfasst, die darin besteht, die Metallisierungsschicht mit dem Verbindungsstück zu verschweissen.

5. Verfahren nach Anspruch 1, dadurch gekennzeichnet, dass man während des Verfahrensschrittes (a) eine zylindrische oder konische Bohrung erzeugt, deren grösster Durchmesser in der Ebene der Fügungsfläche liegt.

6. Verfahren nach Anspruch 1, dadurch gekennzeichnet, dass der metallische Halter durch ein Rohrteil gebildet ist, an das man einen aus einem von dem Material des Halters verschiedenen Material gebildeten Block anschliesst, und dass während der Durchführung des Verfahrensschrittes (a) dieser Block bearbeitet wird, um denjeniegen Teil der Ausnehmung zu bilden, der in der Fügungsfläche des Halters endet.

7. Verbindungsstück, durch Anwendung des Verfahrens nach Anspruch 1 hergestellt, dadurch gekennzeichnet, dass es einen in bezug auf eine Achse drehkörperförmigenmechanismen Halter besitzt, wobei ein mit einer kegelförmigen Metallisierungsschicht versehener Lichtleiter gemäss dieser Achse festgelegt ist und die seitliche Halterfläche eine Bezugsfläche für die Lage des Lichtleiters bildet, während die ebene Fläche, die einen Querschitt der Metallisierungsschicht enthält, welche eine Fügungsfläche für das Verbindungsstück bildet.

8. Verbindungsstück nach Anspruch 7, dadurch gekennzeichnet, dass der mechanische Halter ein zylindrisches Rohrteil, sowie einen im Zentrum des Rohrteils angesetzten Materialblock umfasst, der den Lichtleiter in einer axialen Bohrung dieses Blocks hält.

Fig.1

X                    X

D

12    20    2    3    10    1    11

Fig.2

120    121    10    1

Fig.3

10    30    1

FIG. 4

47
44
46
45
43
1

FIG. 5

47
44

FIG. 6

101
110
2
3
102
+
100
103

Fig. 7

120

121

3

10

1